# EUROPÄISCHE PATENTSCHRIFT

(11) **EP 4 076 095 B1**
(45) Veröffentlichungstag und Bekanntmachung des Hinweises auf die Patenterteilung: **15.11.2023**
(21) Anmeldenummer: 20761549.3
(22) Anmeldetag: 21.08.2020
(51) Int. Cl.: A47J 27/09

(54) **VERSCHLUSSVORRICHTUNG FÜR EINEN DRUCKBEHÄLTER, DRUCKBEHÄLTER UND VERWENDUNG DER VERSCHLUSSVORRICHTUNG**
CLOSURE APPARATUS FOR A PRESSURE VESSEL, PRESSURE VESSEL AND USE OF THE CLOSURE APPARATUS
APPAREIL DE FERMETURE POUR UN RÉCIPIENT SOUS PRESSION, RÉCIPIENT SOUS PRESSION ET UTILISATION DE L'APPAREIL DE FERMETURE

(30) Priorität: 19.12.2019 DE 102019220212
(43) Veröffentlichungstag der Anmeldung: 26.10.2022
(73) Patentinhaber: WMF GmbH, 73312 Geislingen/Steige (DE)
(72) Erfinder: BOERNER, Cornelius, 73329 Kuchen (DE); MORMONE, Maria, 73329 Kuchen (DE); REINHARD, Dieter, 73326 Deggingen (DE)
(74) Vertreter: Pfenning, Meinig & Partner mbB
(86) Internationale Anmeldenummer: PCT/EP2020/073537
(87) Internationale Veröffentlichungsnummer: WO 2021/121684

(56) Entgegenhaltungen:
- EP-A1- 0 032 406
- DE-A1-102017 201 148

## Beschreibung

Es wird eine Verschlussvorrichtung für einen Druckbehälter (z.B. für einen Schnellkochtopf) bereitgestellt, die für den Benutzer ein größeres Maß an Sicherheit bietet, insbesondere wesentlichen Sicherheitsanforderungen aus dem Anhang I der Richtlinie 2014/68/EU entspricht. Die Verschlussvorrichtung ist mit einer Sperre ausgerüstet, die ein Öffnen des Druckbehälters bei einem Innendruck von > 4 kPa auch im Falle eines auf die Verschlussvorrichtung in Richtung Druckbehälter ausgeübten Gegendrucks verhindert. Die Verschlussvorrichtung weist hierfür einen Außenkörper auf, einen Zentralkörper der Verschlussvorrichtung umgibt und beweglich mit diesem verbunden ist. Entlang einer Zylinderachse des Außenkörpers weist der Außenkörper einen bestimmten Abstand (x) zum Zentralkörper auf und Verriegelungsarme des Zentralkörpers sind durch Aussparungen im Außenkörper mindestens um den bestimmten Abstand (x) entlang der Zylinderachse des Außenkörpers beweglich.

In der Richtlinie 2014/68/EU wird in Anhang I "Wesentliche Sicherheitsanforderungen" für Druckbehälter unter Abschnitt 2.3 "Vorkehrungen für die Sicherheit in Handhabung und Betrieb" unter anderem auf die Beschaffenheit der Bedienungseinrichtung hingewiesen. Unter anderem wird auf "Vorrichtungen zur Verhinderung des physischen Zugangs bei Überdruck oder Vakuum im Gerät" hingewiesen. Weiterhin ist zu den Anforderungen an einen Druckbehälter mit abnehmbarer Verschlussvorrichtung notiert: "Lässt sich die Vorrichtung schnell betätigen, so muss das Druckgerät außerdem mit einer Sperre ausgerüstet sein, die ein Öffnen verhindert, solange der Druck oder die Temperatur des Fluids ein Risiko darstellt.". In der DIN EN 12778 wird dieses Risiko durch den Druckwert ≥4 kPa näher spezifiziert.

Es sind im Stand der Technik Druckbehälter mit abnehmbarer Verschlussvorrichtung bekannt, die diesen Sicherheitsanforderungen nicht gerecht werden. In solchen Druckbehältern aus dem Stand der Technik ist die verbaute Restdrucksicherung als ein Verrieglungsarm mit Verrieglungshaken ausgestaltet und direkt an die Kochanzeige gekoppelt. Solange ein Restdruck von ≥4 kPa im Schnellkochtopf anliegt, wird dies durch die Kochanzeige visualisiert und gleichzeitig mechanisch verriegelt. Es kann bei solchen Druckbehältern jedoch nicht ausgeschlossen werden, dass durch ein gezieltes Herunterdrücken der Kochanzeige ein Manipulieren der Restdrucksicherung stattfindet und somit die mechanische Verriegelung auch für Drücke ≥4 kPa aufgehoben wird, was auch bei einem Restdruck von ≥4 kPa im Druckbehälter ein Öffnen des Druckbehälters ermöglicht.

Die Druckschrift DE 10 2017 201148 A1 offenbart eine Verschlussvorrichtung gemäss Oberbegriff des Anspruchs 1. Ausgehend hiervon war es die Aufgabe der vorliegenden Erfindung, eine Verschlussvorrichtung für einen Druckbehälter bereitzustellen, welche die im Stand der Technik beobachteten Nachteile nicht mehr aufweist, d.h. welcher auch bei einem Restdruck von ≥4 kPa im Druckbehälter sicherstellt, dass der Druckbehälter verschlossen bleibt, d.h. nicht mehr über eine Manipulation der Restdrucksicherung geöffnet werden kann. Ferner sollte ein Druckbehälter bereitgestellt werden, der sich nicht mehr über eine Manipulation der Restdrucksicherung bei einem Restdruck von 4 kPa im Druckbehälter öffnen lässt. Zudem sollten Verwendungen der Verschlussvorrichtung angegeben werden.

Die Aufgabe wird gelöst durch die Verschlussvorrichtung mit den Merkmalen von Anspruch 1, den Druckbehälter mit den Merkmalen von Anspruch 12 und die Verwendung der Verschlussvorrichtung gemäß Anspruch 15. Die abhängigen Ansprüche zeigen vorteilhafte Weiterbildungen auf.

Erfindungsgemäß wird eine Verschlussvorrichtung für einen Druckbehälter bereitgestellt, enthaltend
a) einen im wesentlichen zylindrischen Zentralkörper, der entlang einer Zylinderachse des Zentralkörpers eine bestimmte Höhe aufweist und an einer nach außen gerichteten Oberfläche mindestens zwei Verriegelungsarme aufweist, die jeweils einen Verriegelungshaken enthalten; und
b) einen im wesentlich zylindrischen Innenkörper, der mit dem Zentralkörper verbunden ist, zumindest bereichsweise innerhalb des Zentralkörpers angeordnet ist und dazu geeignet ist, auf eine Öffnung eines Druckbehälters aufgebracht zu werden.

Die erfindungsgemäße Verschlussvorrichtung ist dadurch gekennzeichnet, dass sie einen im wesentlichen zylindrischen Außenkörper enthält, wobei der Außenkörper zumindest bereichsweise außerhalb des Zentralkörpers angeordnet ist, der Außenkörper mit dem Zentralkörper beweglich verbunden ist, sodass der Zentralkörper innerhalb des Außenkörpers in Richtung einer Zylinderachse des Außenkörpers beweglich ist, der Außenkörper Aussparungen aufweist, durch welche die Verriegelungsarme vom Zentralkörper durch den Außenkörper nach außen ragen, und der Außenkörper in Richtung einer Zylinderachse des Außenkörpers einen bestimmten Abstand (x) zum Zentralkörper aufweist und die Verriegelungsarme in Richtung der Zylinderachse des Außenkörpers mindestens diesen bestimmten Abstand (x) zu einem Ende der Aussparungen aufweisen.

Mit dem Merkmal, dass der Außenkörper Aussparungen aufweist, durch welche die Verriegelungsarme vom Zentralkörper durch den Außenkörper nach außen ragen ist insbesondere gemeint, dass der Außenkörper Aussparungen aufweist, durch welche die Verriegelungsarme durch zumindest einen Teil des Außenkörpers in einer Richtung nach außen ragen. Anders ausgedrückt wird darunter verstanden, dass die Verriegelungsarme in einer Richtung nach außen zumindest durch einen von seinen Aussparungen gebildeten Teil des Außenkörpers ragen (bzw. dorthin vordringen). Die Verriegelungsarme können somit in einer Richtung nach außen ragen, ohne dabei den Außenkörper komplett zu durchdringen. Eine solche Ausgestaltung kann beispielsweise vorliegen, wenn der Außenkörper keine durchgängigen Aussparungen aufweist, denn in diesem Fall ist ein komplettes Durchdringen der Verriegelungsarme durch den Außenkörpers nicht möglich.

Ferner ist die erfindungsgemäße Verschlussvorrichtung dadurch gekennzeichnet, dass der Außenkörper zumindest in einem Signalgebungsbereich, der um die Zylinderachse des Außenkörpers angeordnet ist, eine durchgängige Ausnehmung aufweist, wobei der Zentralkörper in einem Bereich, der dem Signalgebungsbereich des Außenkörpers gegenüber liegt, ein Anzeigenelement aufweist, wobei das Anzeigenelement
a) als eine Erhebung des Zentralkörpers ausgestaltet ist, die sich in Richtung der Ausnehmung erstreckt und dazu geeignet ist, die Ausnehmung zumindest teilweise zu passieren, wobei der Außenkörper oberhalb der durchgängigen Ausnehmung eine Abdeckung aufweist, die zumindest in einem Bereich, welcher der Erhebung des Zentralkörpers gegenüberliegt, aus einem für sichtbares Licht transparenten Material besteht; oder
b) als ein am Zentralkörper befestigtes und teilweise im Innenkörper befindliches Federelement ausgestaltet ist, das sich in Richtung der Ausnehmung erstreckt und dazu geeignet ist, die Ausnehmung zumindest teilweise zu passieren, wobei das Federelement dazu konfiguriert ist, sich bei Ausübung eines Drucks im Bereich von > 0 kPa bis < 4 kPa auf eine Außenfläche des Federelement in Richtung des Innenkörpers zu bewegen.

Der entscheidende Vorteil der erfindungsgemäßen Verschlussvorrichtung ist, dass ein mit der Verschlussvorrichtung verschlossener Druckbehälter bei einem Innendruck von ≥4 kPa verschlossen bleibt, d.h. nicht mehr über eine Manipulation der Restdrucksicherung (z.B. über ein mechanisches Drücken der Verschlussvorrichtung in Richtung Druckbehälter gegen den Innendruck von ≥4 kPa geöffnet werden kann. Ein über die Verschlussvorrichtung an den Benutzer des Druckbehälters (optisch) ausgegebenes Kochsignal ist somit von der über die Verschlussvorrichtung bereitgestellte Restdrucksicherung entkoppelt. Damit ist sichergestellt, dass bei gleichzeitigem Herunterdrücken des (optischen) Kochsignals der Verschlussvorrichtung und Vorhandensein eines Drucks ≥4 kPa im inneren des Druckbehälters (z.B. eines Schnellkochtopfes) kein Entriegeln bzw. Öffnen des Druckbehälters möglich ist.

Ein besonderer Vorteil der Varianten a) und b) ist, dass dem Benutzer ein erster Druck im Bereich von > 0 bis 4 kPa beim Ankochen und ein Restdruck im Bereich von >0 bis 4 kPa beim Abkühlen signalisiert wird. Bei der Variante a) ist dies über ein Erkennen einer Bewegung des erhöhten Bereichs des Zentralkörpers in Richtung des transparenten Bereichs der Abdeckung bzw. in die entgegengesetzte Richtung möglich. Eine Öffnung eines mit der Verschlussvorrichtung verschlossenen Druckbehälters über eine Manipulation der Restdrucksicherung ist in dieser Variante durch die Abdeckung mit dem transparenten Bereich ausgeschlossen. Bei der Variante b) ist dies über ein Erkennen einer Bewegung des Anzeigenelements durch die Ausnehmung des Außenkörpers heraus bzw. in diese hinein möglich. In beiden Fällen ist somit eine visuelle Wahrnehmung eines Druckaufbaus und Druckabbaus in diesem Druckbereich durch einen Benutzer gegeben. Eine Öffnung eines mit der Verschlussvorrichtung verschlossenen Druckbehälters über eine Manipulation der Restdrucksicherung ist in dieser Variante ausgeschlossen, indem die Anzeigeneinheit über Druckausübung im Bereich von >0 bis 4 kPa durch einen Benutzer in den Innenkörper bewegbar ist.

Ein vollständiges Eindrücken des Anzeigenelements durch den Benutzer kann somit nicht dazu führen, dass sich die Verriegelungsarme des Zentralkörpers in Richtung der des Druckbehälters um den Abstand (x) bewegen und eine Entriegelung der Verschlussvorrichtung bewirken. Dies erhöht die Sicherheit für einen Benutzer im Falle eines (manipulativen) Eindrückens des Anzeigenelements in den Innenkörper.

In einer vorteilhaften Ausgestaltungsform entspricht der Abstand x (= Abstand vom Außenkörper zum Innenkörper in Richtung einer Zylinderachse des Außenkörpers) einer Dehnungsstrecke einer Feder eines Druckbehälters bei einem bestimmten Innendruck des Druckbehälters, bevorzugt einer Dehnungsstrecke einer Feder eines Druckbehälters bei einem Innendruck des Druckbehälters im Bereich von > 0 kPa bis < 4 kPa.

Der Abstand x kann einem Wert im Bereich von 1 mm bis 6 mm, bevorzugt 1,5 mm bis 5 mm, besonders bevorzugt 2 mm bis 4 mm, insbesondere 3 mm, entsprechen.

Der Signalgebungsbereich kann sich auf einer Fläche erstrecken, die >0 bis 90%, bevorzugt 5 bis 80%, besonders bevorzugt 10 bis 70 %, ganz besonders bevorzugt 20 bis 70%, insbesondere 30 bis 60%, optional 40 bis 50%, einer Fläche des Außenkörpers entspricht, die im wesentlichen senkrecht zur Zentralachse des Außenkörpers angeordnet ist.

In der Variante a) kann das für sichtbares Licht transparente Material ausgewählt sein aus der Gruppe bestehend aus Glas, PMMA, PC, PVC, PS, PPO, PE, und Kombinationen hiervon.

Ferner kann in der Variante a) die Erhebung des Zentralkörpers im wesentlichen zylindrisch ausgestaltet sein.

Zudem kann in der Variante a) die Erhöhung des Zentralkörpers eine Höhe aufweisen, die um den bestimmten Abstand (x) des Außenkörpers zum Zentralkörper, in Richtung einer Zylinderachse des Außenkörpers, höher ist als der Zentralkörper ohne die Erhebung.

In einer bevorzugten Ausgestaltungsform der Variante a) besteht die gesamte Abdeckung aus einem für sichtbares Licht transparenten Material. Dies ist mit dem Vorteil verbunden, dass die Herstellung der Verschlussvorrichtung vereinfacht und kostengünstiger gestaltet ist.

In der Variante b) kann das Anzeigenelement einen breiten und einen schmalen Teil aufweisen oder daraus bestehen.

Zudem kann in der Variante b) um den schmalen Teil eine Feder angeordnet sein. Diese Ausgestaltungsform hat den Vorteil , dass die Beweglichkeit des Anzeigenelements in den Innenkörper durch Ausüben eines Drucks im Bereich von > 0 kPa bis < 4 kPa nicht durch eine Feder bereitgestellt werden muss, die von einem Druckbehälter enthalten ist, auf der die Verschlussvorrichtung angebracht wird.

Abgesehen davon kann in der Variante b) über Ausübung eines Drucks im Bereich von > 0 kPa bis < 4 kPa auf den breiten Teil der schmale Teil vollständig in den Innenkörper bewegbar sein.

Ferner kann der breite Teil in der Variante b) die Form eines Pilzhutes aufweisen.

In einer bevorzugten Ausgestaltungsform der Variante b) weist die durchgängige Ausnehmung einen Anschlag auf, der bei Ausübung eines Drucks im Bereich von > 0 kPa bis < 4 kPa auf den breiten Teil die Bewegung des breite Teils in Richtung des Innenkörpers begrenzt. Dies hat den Vorteil, dass das Federelement über Druckausübung durch einen Benutzer nur eine definierte Maximalstrecke (d.h. nicht mehr als eine vordefinierte Länge) in den Innenkörper bewegbar ist. Der Anschlag der durchgängigen Ausnehmung und der breite Teil des Anzeigenelements können so ausgestaltet sein, dass bei maximaler Druckausübung auf den breiten Teil des Federelements eine äußere Fläche des breiten Teils des Federelements flächenbündig zu einer äußeren Fläche des Außenkörpers ist.

Der Zentralkörper der Verschlussvorrichtung kann einstückig mit dem Innenkörper ausgebildet sein.

Ferner kann der Zentralkörper der Verschlussvorrichtung über eine Steckverbindung in den Außenkörper eingesteckt sein.

In einer bevorzugten Ausgestaltungsform weist der Außenkörper, in Richtung einer Zylinderachse des Außenkörpers, eine Höhe auf, die mindestens 2 mm, bevorzugt mindestens 3 mm, größer ist als die Höhe des Zentralkörpers in diese Richtung.

In einer weiteren bevorzugten Ausgestaltungsform weisen die Aussparungen des Außenkörpers, in Richtung einer Zylinderachse des Außenkörpers, eine Höhe auf, die mindestens 2 mm, bevorzugt mindestens 3 mm, größer ist als die Höhe der Verriegelungsarme in diese Richtung.

Die zwei Verriegelungsarme des Zentralkörpers können einstückig mit dem Zentralkörper sein.

Zudem können die zwei Verriegelungsarme des Zentralkörpers jeweils einstückig mit den Verriegelungshaken sein.

In einer bevorzugten Ausgestaltungsform weist der Außenkörper eine Kochanzeige auf.

Der im wesentlichen zylindrische Zentralkörper kann einen Durchmesser im Bereich von von 20 bis 35 cm, bevorzugt von 26 bis 28 cm, aufweisen.

Der im wesentlichen zylindrische Innenkörper kann einen Durchmesser im Bereich von 5 bis 11 cm, bevorzugt von 7 bis 9 cm, aufweisen.

Der im wesentlichen zylindrische Außenkörper kann einen Durchmesser im Bereich von 30 bis 45 cm, bevorzugt von 32 bis 36 cm, aufweisen.

Ferner wird erfindungsgemäß ein Druckbehälter, bevorzugt ein Druckkochtopf, bereitgestellt, der eine erfindungsgemäße Verschlussvorrichtung enthält.

Die erfindungsgemäße Verschlussvorrichtung kann auf den Druckbehälter aufgebracht sein. Bevorzugt ist die erfindungsgemäße Verschlussvorrichtung über den Innenkörper der Verschlussvorrichtung auf den Druckbehälter aufgebracht.

Der Druckbehälter kann dadurch gekennzeichnet sein, dass er einen oder mehrere Ventilheber mit jeweils mindestens einer Anschlagskante aufweist. Die Anschlagskante(n) kann/können so ausgestaltet sein, dass sie bei einem Druck von ≥ 4 kPa im Inneren des Druckbehälters, und einem gleichzeitigen, entsprechenden Gegendruck von ≥ 4 kPa auf den Außenkörper der Verschlussvorrichtung, in die Verriegelungshaken der Verriegelungsarme der Verschlussvorrichtung eingreift/eingreifen. Ferner kann/können die Anschlagskante(n) so ausgestaltet sein, dass sie bei einem Druck von < 4 kPa im Inneren des Druckbehälters, und optional einem gleichzeitigen, entsprechenden Gegendruck von ≥ 4 kPa auf den Außenkörper der Verschlussvorrichtung, nicht in die Verriegelungshaken der Verriegelungsarme eingreift/eingreifen.

In einer bevorzugten Ausgestaltungsform ist der Druckbehälter dadurch gekennzeichnet, dass bei einem Druck von 0 kPa im Inneren des Druckbehälters der Zentralkörper, in Richtung einer Zylinderachse des Außenkörpers, einen Abstand zu dem Außenkörper aufweist, der im Bereich von 1 mm bis 6 mm, bevorzugt 1,5 mm bis 5 mm, besonders bevorzugt 2 mm bis 4 mm, insbesondere 3 mm, liegt.

Ferner kann der Druckbehälter dadurch gekennzeichnet sein, dass bei einem Druck von 0 kPa im Inneren des Druckbehälters die Verriegelungsarme, in Richtung einer Zylinderachse des Außenkörpers, einen Abstand bis zu einem Ende der Aussparungen aufweisen, der im Bereich von 1 mm bis 6 mm, bevorzugt 1,5 mm bis 5 mm, besonders bevorzugt 2 mm bis 4 mm, insbesondere 3 mm, liegt.

In einer bevorzugten Ausgestaltungsform weist der Druckbehälter eine Feder auf, die mit dem Innenkörper der Verschlussvorrichtung verbunden ist und bei einem Druck von 4 kPa im Inneren des Druckbehälters eine Dehnung über eine Strecke erfährt, die (in Richtung der Zylinderachse des Zentralkörpers) im Wesentlichen einem Abstand vom Zentralkörper zum Außenkörper und/oder einem Abstand von den Verriegelungsarmen zum Ende der Aussparungen entspricht, bevorzugt eine Dehnungstrecke im Bereich von 1 mm bis 6 mm, bevorzugt 1,5 mm bis 5 mm, besonders bevorzugt 2 mm bis 4 mm, insbesondere 3 mm.

Es wird zudem die Verwendung der erfindungsgemäßen Verschlussvorrichtung zum Verschließen eines Druckbehälters, bevorzugt zum Verschließen eines Druckkochtopfs, vorgeschlagen.

Anhand der nachfolgenden Figuren soll der erfindungsgemäße Gegenstand näher erläutert werden ohne diesen auf die hier dargestellten, spezifischen Ausgestaltungsformen einschränken zu wollen.

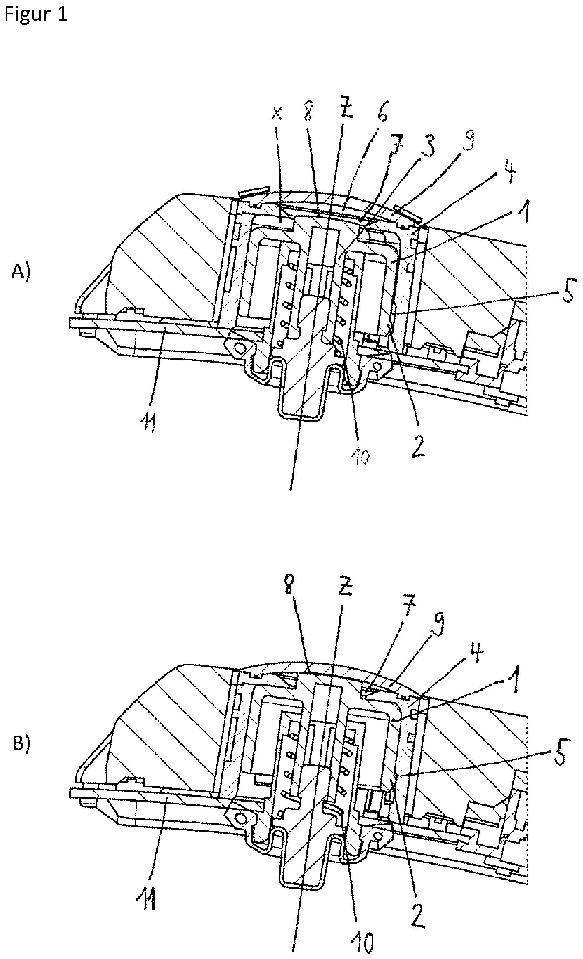

Figur 1 zeigt eine erfindungsgemäße Verschlussvorrichtung, die auf einem Druckbehälter 11 aufgebracht ist. Figur 1A zeigt dem Zustand der Verschlussvorrichtung bei einem Innendruck D_{I} von < 4 kPa im Inneren des Druckbehälters 11 und Figur 1B zeigt den Zustand der Verschlussvorrichtung bei einem Innendruck D_{I} von > 4 kPa im Inneren des Druckbehälters 11. Der Zentralkörper 1 der Verschlussvorrichtung weist mindestens einen Verriegelungsarm 2 mit Verriegelungshaken auf. Der Innenkörper 3 der Verschlussvorrichtung ist hier einstückig mit dem Zentralkörper 1 ausgebildet. Der Außenkörper 4 der Verriegelungsvorrichtung weist eine Aussparung 5 auf, in welche der Verriegelungsarm 2 des Zentralkörpers 1 hineinragt. Ein Signalgebungsbereich 6 des Außenkörpers 4 befindet sich an der Stelle einer durchgängigen Ausnehmung 7 des Außenkörpers 4. Ein Anzeigenelement 8 des Zentralkörpers 1 (hier: eine Erhebung) ragt teilweise durch die durchgängige Ausnehmung 7 des Außenkörpers 4. In dieser Ausgestaltungsform weist der Außenkörper 4 eine Abdeckung 9 auf. Der Druckbehälter 11 enthält eine Feder 10, die mit dem Innenkörper verbunden ist. Der Außenkörper 4 weist in Richtung einer Zylinderachse Z des Außenkörpers 4 zum Zentralkörper 1 einen bestimmten Abstand x auf.

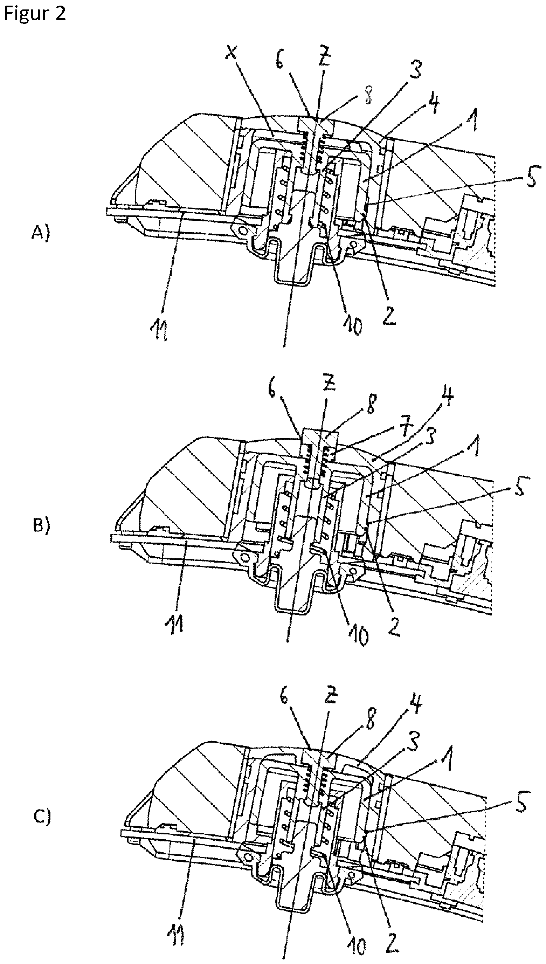

Figur 2 zeigt eine weitere erfindungsgemäße Verschlussvorrichtung, die auf einem Druckbehälter 11 aufgebracht ist. Figur 2A zeigt dem Zustand der Verschlussvorrichtung bei einem Innendruck D_{I} von < 4 kPa im Inneren des Druckbehälters 11 und Figuren 2B und 2C zeigen den Zustand der Verschlussvorrichtung bei einem Innendruck D_{I} von > 4 kPa im Inneren des Druckbehälters 11. Figur 2B zeigt den Zustand der Verschlussvorrichtung, in dem von einem Benutzer kein Druck auf das Anzeigenelement 8 des Zentralkörpers 1 (hier: ein Federelement) ausgeübt wird und Figur 2C zeigt den Zustand der Verschlussvorrichtung, in dem von einem Benutzer ein Druck im Bereich von >0 bis <4 kPa auf das Anzeigenelement 8 des Zentralkörpers 1 ausgeübt wird. Der Zentralkörper 1 der Verschlussvorrichtung weist mindestens einen Verriegelungsarm 2 mit Verriegelungshaken auf. Der Innenkörper 3 der Verschlussvorrichtung ist hier einstückig mit dem Zentralkörper 1 ausgebildet. Der Außenkörper 4 der Verriegelungsvorrichtung weist eine Aussparung 5 auf, in welche der Verriegelungsarm 2 des Zentralkörpers 1 hineinragt. Ein Signalgebungsbereich 6 des Außenkörpers 4 befindet sich an der Stelle einer durchgängigen Ausnehmung 7 des Außenkörpers 4. Ein Anzeigenelement 8 des Zentralkörpers 1 (hier: ein Federelement) ragt durch die durchgängige Ausnehmung 7 des Außenkörpers 4. Der Druckbehälter 11 enthält eine Feder 10, die mit dem Innenkörper verbunden ist. Der Außenkörper 4 weist in Richtung einer Zylinderachse Z des Außenkörpers 4 zum Zentralkörper 1 einen bestimmten Abstand x auf.

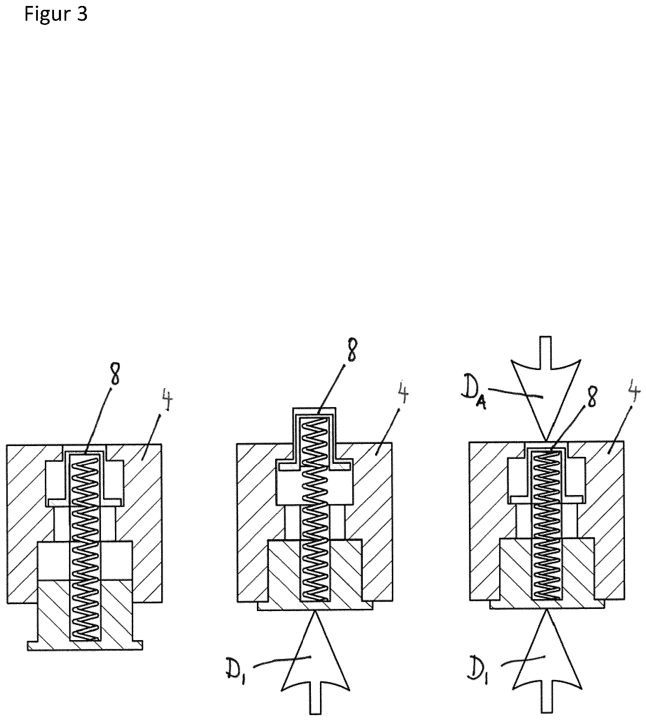

Figur 3 zeigt schematisch den Wirkmechanismus für den Fall, dass das Anzeigenelement 8 des Zentralkörpers 1 als Federelement ausgestaltet ist. Die linke Abbildung zeigt den Fall, dass in dem Druckbehälter ein Innendruck D_{I} von < 4 kPa vorherrscht. Die mittlere Abbildung zeigt den Fall, dass in dem Druckbehälter ein Innendruck D_{I} von > 4 kPa vorherrscht. Das Federelement 8 bewegt sich durch die Ausnehmung des Außenkörpers 4 nach außen und ist für einen Benutzer gut sichtbar. Das Federelement 8 zeigt dem Benutzer an, dass in dem Druckbehälter ein bestimmter Druck vorherrscht. Die rechte Abbildung zeigt die Situation, in der ein Benutzer der Verschlussvorrichtung einen Außendruck D_{A} im Bereich von > 0 bis < 4 kPa auf das Federelement entlang der Zylinderachse des Zentralkörpers ausübt. Das Federelement 8 ist so konzipiert, dass es sich in diesem Druckbereich mindestens um eine Länge zusammendrücken lässt, die der Länge entspricht, aus dem das Federelement 8 aus dem Außenkörper 4 ragt. Anders ausgedrückt lässt sich das Federelement 8 in diesem Druckbereich bis zu einem Anschlag der Verschlussvorrichtung eindrücken. Falls der Innendruck D_{I} > 4 kPa entspricht, bleibt der mit der Verschlussvorrichtung verschlossene Druckbehälter verschlossen, d.h. es kann durch die Druckausübung eines Benutzers kein Wasserdampf aus dem Druckbehälter entweichen.

### Bezugszeichenliste

- 1:: Zentralkörper;
- 2:: Verriegelungsarm mit Verriegelungshaken;
- 3:: Innenkörper;
- 4:: Außenkörper;
- 5:: Aussparung im Außenkörper;
- 6:: Signalgebungsbereich des Außenkörpers;
- 7:: durchgängige Ausnehmung des Außenkörpers;
- 8:: Anzeigenelement des Zentralkörpers (eine Erhebung oder ein Federelement);
- 9:: Abdeckung des Außenkörpers;
- 10:: Feder eines Druckbehälters;
- 11:: Druckbehälter;
- x:: Abstand von Außenkörper zum Zentralkörper;
- Z:: Zylinderachse des Zentralkörpers;
- D_{A}:: Druck von Aussen (z.B. durch einen Benutzer) im Bereich von >0 Pa bis <4 kPa;
- D_{I}:: Druck von Innen (d.h. innerhalb eines Druckbehälters, auf dem die Verschlussvorrichtung aufgebracht ist) im Bereich von >4 kPa.

## Patentansprüche

1. Verschlussvorrichtung für einen Druckbehälter, enthaltend
einen im wesentlichen zylindrischen Zentralkörper (1), der entlang einer Zylinderachse des Zentralkörpers eine bestimmte Höhe aufweist und an einer nach außen gerichteten Oberfläche mindestens zwei Verriegelungsarme (2) aufweist, die jeweils einen Verriegelungshaken enthalten;
und
einen im wesentlich zylindrischen Innenkörper (3), der mit dem Zentralkörper verbunden ist, zumindest bereichsweise innerhalb des Zentralkörpers angeordnet ist und dazu geeignet ist, auf eine Öffnung eines Druckbehälters aufgebracht zu werden;
**dadurch gekennzeichnet, dass** die Verschlussvorrichtung einen im wesentlichen zylindrischen Außenkörper (4) enthält, wobei
i) der Außenkörper zumindest bereichsweise außerhalb des Zentralkörpers angeordnet ist;
ii) der Außenkörper mit dem Zentralkörper beweglich verbunden ist, sodass der Zentralkörper innerhalb des Außenkörpers in Richtung einer Zylinderachse des Außenkörpers beweglich ist;
iii) der Außenkörper Aussparungen (5) aufweist, durch welche die Verriegelungsarme vom Zentralkörper durch den Außenkörper nach außen ragen;
iv) der Außenkörper in Richtung einer Zylinderachse (Z) des Außenkörpers einen bestimmten Abstand (x) zum Zentralkörper aufweist und die Verriegelungsarme in Richtung der Zylinderachse des Außenkörpers mindestens diesen bestimmten Abstand (x) zu einem Ende der Aussparungen aufweisen, und
v) der Außenkörper zumindest in einem Signalgebungsbereich (6), der um die Zylinderachse des Außenkörpers angeordnet ist, eine durchgängige Ausnehmung (7) aufweist, wobei der Zentralkörper in einem Bereich, der dem Signalgebungsbereich des Außenkörpers gegenüber liegt, ein Anzeigenelement (8) aufweist, wobei das Anzeigenelement
a) als eine Erhebung des Zentralkörpers ausgestaltet ist, die sich in Richtung der Ausnehmung erstreckt und dazu geeignet ist, die Ausnehmung zumindest teilweise zu passieren, wobei der Außenkörper oberhalb der durchgängigen Ausnehmung eine Abdeckung (9) aufweist, die zumindest in einem Bereich, welcher der Erhebung des Zentralkörpers gegenüberliegt, aus einem für sichtbares Licht transparenten Material besteht; oder
b) als ein am Zentralkörper befestigtes und teilweise im Innenkörper befindliches Federelement ausgestaltet ist, das sich in Richtung der Ausnehmung erstreckt und dazu geeignet ist, die Ausnehmung zumindest teilweise zu passieren, wobei das Federelement dazu konfiguriert ist, sich bei Ausübung eines Drucks im Bereich von > 0 kPa bis < 4 kPa auf eine Außenfläche des Federelement in Richtung des Innenkörpers zu bewegen.

2. Verschlussvorrichtung gemäß Anspruch 1, **dadurch gekennzeichnet, dass** der bestimmte Abstand (x) des Außenkörpers zum Zentralkörper, in Richtung einer Zylinderachse des Außenkörpers,
i) einer Dehnungsstrecke einer Feder eines Druckbehälters bei einem bestimmten Innendruck des Druckbehälters entspricht, bevorzugt einer Dehnungsstrecke einer Feder eines Druckbehälters bei einem Innendruck des Druckbehälters im Bereich von > 0 kPa bis < 4 kPa; und/oder
ii) einem Wert im Bereich von 1 mm bis 6 mm, bevorzugt 1,5 mm bis 5 mm, besonders bevorzugt 2 mm bis 4 mm, insbesondere 3 mm, entspricht.

3. Verschlussvorrichtung gemäß einem der vorhergehenden Ansprüche, **dadurch gekennzeichnet, dass** sich der Signalgebungsbereich auf einer Fläche erstreckt, die >0 bis 90%, bevorzugt 5 bis 80%, besonders bevorzugt 10 bis 70 %, ganz besonders bevorzugt 20 bis 70%, insbesondere 30 bis 60%, optional 40 bis 50%, einer Fläche des Außenkörpers entspricht, die im wesentlichen senkrecht zur Zentralachse des Außenkörpers angeordnet ist.

4. Verschlussvorrichtung gemäß einem der vorhergehenden Ansprüche, **dadurch gekennzeichnet, dass** in der Variante a)
i) das für sichtbares Licht transparente Material ausgewählt ist aus der Gruppe bestehend aus Glas, PMMA, PC, PVC, PS, PPO, PE, und Kombinationen hiervon; und/oder
ii) die Erhebung des Zentralkörpers im wesentlichen zylindrisch ausgestaltet ist; und/oder
iii) die Erhebung des Zentralkörpers eine Höhe aufweist, die um den bestimmten Abstand (x) des Außenkörpers zum Zentralkörper, in Richtung einer Zylinderachse des Außenkörpers, höher ist als die Höhe des Zentralkörpers ohne die Erhebung; und/oder
iv) die gesamte Abdeckung aus einem für sichtbares Licht transparenten Material besteht.

5. Verschlussvorrichtung gemäß einem der vorhergehenden Ansprüche, **dadurch gekennzeichnet, dass** in der Variante b) das Federelement einen breiten und einen schmalen Teil aufweist oder daraus besteht, wobei bevorzugt
i) um den schmalen Teil eine Feder angeordnet ist; und/oder
ii) über Ausübung eines Drucks im Bereich von > 0 kPa bis < 4 kPa auf den breiten Teil der schmale Teil vollständig in den Innenkörper bewegbar ist; und/oder
iii) der breite Teil die Form eines Pilzhutes aufweist; und/oder
iv) die durchgängige Ausnehmung einen Anschlag aufweist, der bei Ausübung eines Drucks im Bereich von > 0 kPa bis < 4 kPa auf den breiten Teil die Bewegung des breite Teils in Richtung des Innenkörpers begrenzt.

6. Verschlussvorrichtung gemäß einem der vorhergehenden Ansprüche, **dadurch gekennzeichnet, dass** der Zentralkörper
i) einstückig mit dem Innenkörper ausgebildet ist; und/oder
ii) über eine Steckverbindung in den Außenkörper eingesteckt ist.

7. Verschlussvorrichtung gemäß einem der vorhergehenden Ansprüche, **dadurch gekennzeichnet, dass**, in Richtung einer Zylinderachse des Außenkörpers, der Außenkörper eine Höhe aufweist, die mindestens 2 mm, bevorzugt mindestens 3 mm, größer ist als die Höhe des Zentralkörpers in diese Richtung.

8. Verschlussvorrichtung gemäß einem der vorhergehenden Ansprüche, **dadurch gekennzeichnet, dass**, in Richtung einer Zylinderachse des Außenkörpers, die Aussparungen eine Höhe aufweisen, die mindestens 2 mm, bevorzugt mindestens 3 mm, größer ist als die Höhe der Verriegelungsarme in diese Richtung.

9. Verschlussvorrichtung gemäß einem der vorhergehenden Ansprüche, **dadurch gekennzeichnet, dass** die zwei Verriegelungsarme des Zentralkörpers
i) einstückig mit dem Zentralkörper sind; und/oder
ii) jeweils einstückig mit den Verriegelungshaken sind.

10. Verschlussvorrichtung gemäß einem der vorhergehenden Ansprüche, **dadurch gekennzeichnet, dass** der Außenkörper eine Kochanzeige aufweist.

11. Verschlussvorrichtung gemäß einem der vorhergehenden Ansprüche, **dadurch gekennzeichnet, dass** der
i) im wesentlichen zylindrische Zentralkörper einen Durchmesser im Bereich von 20 bis 35 cm, bevorzugt von 26 bis 28 cm, aufweist; und/oder
ii) im wesentlichen zylindrische Innenkörper einen Durchmesser im Bereich von 5 bis 11 cm, bevorzugt von 7 bis 9 cm, aufweist; und/oder
iii) im wesentlichen zylindrische Außenkörper einen Durchmesser im Bereich von 30 bis 45 cm, bevorzugt von 32 bis 36 cm, aufweist.

12. Druckbehälter (11), bevorzugt Druckkochtopf, enthaltend eine Verschlussvorrichtung gemäß einem der vorhergehenden Ansprüche.

13. Druckbehälter gemäß Anspruch 12, wobei die Verschlussvorrichtung gemäß einem der Ansprüche 1 bis 11 auf den Druckbehälter aufgebracht ist, bevorzugt über den Innenkörper der Verschlussvorrichtung auf den Druckbehälter aufgebracht ist.

14. Druckbehälter gemäß einem der Ansprüche 12 oder 13, **dadurch gekennzeichnet, dass** der Druckbehälter eine Feder aufweist, die mit dem Innenkörper der Verschlussvorrichtung verbunden ist und bei einem Druck von 4 kPa im Inneren des Druckbehälters eine Dehnung über eine Strecke erfährt, die im Wesentlichen einem Abstand vom Zentralkörper zum Außenkörper und/oder einem Abstand von den Verriegelungsarmen zum Ende der Aussparungen entspricht, bevorzugt eine Dehnungstrecke im Bereich von 1 mm bis 6 mm, bevorzugt 1,5 mm bis 5 mm, besonders bevorzugt 2 mm bis 4 mm, insbesondere 3 mm.

15. Verwendung der Verschlussvorrichtung gemäß einem der Ansprüche 1 bis 11 zum Verschließen eines Druckbehälters (11), bevorzugt zum Verschließen eines Druckkochtopfs.

## Claims

1. A closure apparatus for a pressure vessel, comprising
a substantially cylindrical central body (1) that has a specific height along a cylinder axis of the central body and has at least two locking arms (2), each comprising a locking hook, at an outwardly directed surface; and
a substantially cylindrical inner body (3) that is connected to the central body, is arranged at least regionally within the central body, and is suitable to be applied onto an opening of a pressure vessel; **characterised in that** the closure apparatus comprises an essentially cylindrical outer body (4),
i) the outer body being disposed, at least in regions, outside the central body;
ii) the outer body being movably connected to the central body so that the central body is movable within the outer body in the direction of a cylinder axis of the outer body;
iii) the outer body having recesses (5) through which the locking arms project outwardly from the central body through the outer body;
iv) the outer body having a specific distance (x) from the central body in the direction of a cylinder axis (Z) of the outer body and the locking arms having at least said specific distance (x) from an end of the recesses in the direction of the cylinder axis of the outer body; and
v) the outer body having an end-to-end recess (7) at least in a signaling zone (6) that is arranged around the cylinder axis of the outer body, with the central body having a display element (8) in a region that is disposed opposite the signaling zone of the outer body, with the display element
a) being designed as an elevated portion of the central body that extends in the direction of the recess and is suitable to at least partially pass through the recess, with the outer body having a cover (9) above the end-to-end recess, which cover, at least in a region that is disposed opposite the elevated portion of the central body, consists of a material transparent to visible light; or
b) being designed as a spring element that is fastened to the central body and is partially located in the inner body, with the spring element extending in the direction of the recess and being suitable to at least partially pass through the recess, with the spring element being configured to move in the direction of the inner body by an exertion of pressure in the range from > 0 kPa to < 4 kPa onto an outer surface of the spring element.

2. A closure apparatus in accordance with claim 1, **characterized in that** the specific distance (x) of the outer body from the central body, in a direction of the cylinder axis of the outer body,
i) corresponds to a stretching distance of a spring of a pressure vessel at a specific internal pressure of the pressure vessel, preferably to a stretching distance of a spring of a pressure vessel at an internal pressure of the pressure vessel in the range from > 0 kPa to < 4 kPa; and/or
ii) corresponds to a value in the range from 1 mm to 6 mm, preferably 1.5 mm to 5 mm, particularly preferably 2 mm to 4 mm, in particular 3 mm.

3. A closure apparatus in accordance with one of the preceding claims, **characterized in that** the signaling zone extends over an area that corresponds to > 0 to 90%, preferably 5 to 80%, particularly preferably 10 to 70%, very particularly preferably 20 to 70%, in particular 30 to 60%, optionally 40 to 50%, of an area of the outer body that is arranged substantially perpendicular to the central axis of the outer body.

4. A closure apparatus in accordance with one of the preceding claims, **characterized in that**, in variant a),
i) the material transparent to visible light is selected from the group consisting of glass, PMMA, PC, PVC, PS, PPO, PE, and combinations thereof; and/ or
ii) the elevated portion of the central body is substantially cylindrical; and/or
iii) the elevated portion of the central body has a height that is higher by the specific distance (x) of the outer body from the central body, in the direction of a cylinder axis of the outer body, than the height of the central body without the elevated portion; and/ or
iv) the whole cover consists of a material transparent to visible light.

5. A closure apparatus in accordance with one of the preceding claims, **characterized in that**, in variant b), the spring element comprises or consists of a wide part and a narrow part, with preferably
i) a spring being arranged around the narrow part; and/or
ii) the narrow part being completely movable into the inner body by exerting a pressure in the range of > 0 kPa to < 4 kPa onto the wide part; and/or
iii) the wide part having the form of a cap of a mushroom; and/or
iv) the end-to-end recess having an abutment that, on an exertion of a pressure in the range of > 0 kPa to < 4 kPa onto the wide part, limits the movement of the wide part in the direction of the inner body.

6. A closure apparatus in accordance with one of the preceding claims, **characterized in that** the central body
i) is configured in one piece with the inner body; and/or
ii) is inserted in the outer body via a plug connection.

7. A closure apparatus according to one of the preceding claims, **characterised in that** the outer body, in the direction of a cylindrical axis of the outer body, has a height which is at least 2 mm, preferably at least 3 mm, greater than the height of the central body in this direction.

8. A closure apparatus according to one of the preceding claims, **characterised in that** the recesses, in the direction of a cylindrical axis of the outer body, have a height which is at least 2 mm, preferably at least 3 mm, greater than the height of the locking arms in this direction.

9. A closure apparatus according to one of the preceding claims, **characterised in that** the two locking arms of the central body
i) are in one piece with the central body; and/or
ii) are respectively in one piece with the locking hooks.

10. A closure apparatus according to one of the preceding claims, **characterised in that** the outer body has a cooking display.

11. A closure apparatus according to one of the preceding claims, **characterised in that** the
i) essentially cylindrical central body has a diameter in the range of 20 to 35 cm, preferably of 26 to 28 cm; and/or
ii) essentially cylindrical inner body has a diameter in the range of 5 to 11 cm, preferably of 7 to 9 cm; and/or
iii) essentially cylindrical outer body has a diameter in the range of 30 to 45 cm, preferably of 32 to 36 cm.

12. A pressure vessel (11), preferably a pressure cooker, comprising a closure apparatus in accordance with one of the preceding claims.

13. A pressure vessel in accordance with claim 12, wherein the closure apparatus in accordance with one of the claims 1 to 11 is applied onto the pressure vessel; is preferably applied onto the pressure vessel via the inner body of the closure apparatus.

14. A pressure vessel in accordance with one of the claims 12 or 13, **characterized in that** the pressure vessel has a spring that is connected to the inner body of the closure apparatus and undergoes stretching at a pressure of 4 kPa in the interior of the pressure vessel over a distance that substantially corresponds to a distance from the central body to the outer body and/or a distance from the locking arms to the end of the recesses, preferably a stretching distance in the range from 1 mm to 6 mm, preferably 1.5 mm to 5 mm, particularly preferably 2 mm to 4 mm, in particular 3 mm.

15. Use of the closure apparatus in accordance with one of the claims 1 to 11 to close a pressure vessel (11), preferably to close a pressure cooker.

## Revendications

1. Dispositif de fermeture pour un récipient sous pression, contenant
un corps central (1) globalement cylindrique, qui présente, le long d'un axe de cylindre du corps central, une hauteur déterminée et qui comprend, sur une surface orientée vers l'extérieur, au moins deux bras de verrouillage (2) qui comprennent chacun un crochet de verrouillage ;
et
un corps interne (3) globalement cylindrique, qui est relié avec le corps central, qui est disposé, au moins à certains endroits, à l'intérieur du corps central et qui est conçu pour être monté sur une ouverture d'un récipient sous pression ;
**caractérisé en ce que** le dispositif de fermeture comprend un corps externe (4) globalement cylindrique, dans lequel
i. le corps externe est disposé, au moins à certains endroits, à l'extérieur du corps central ;
ii. le corps externe est relié de manière mobile avec le corps central, de sorte que le corps central est mobile à l'intérieur du corps externe en direction d'un axe de cylindre du corps externe ;
iii. le corps externe comprend des évidements (5) à travers lesquels les bras de verrouillage dépassent du corps central à travers le corps externe vers l'extérieur ;
iv. le corps externe présente, en direction d'un axe de cylindre (Z) du corps externe, une distance (x) déterminée par rapport au corps central et les bras de verrouillage présentent, en direction de l'axe de cylindre du corps externe, au moins cette distance (x) déterminée par rapport à une extrémité des évidements et
v. le corps externe comprend, au moins dans une partie de signalisation (6), qui est disposée autour de l'axe de cylindre du corps externe, un évidement continu (7), dans lequel le corps central comprend, dans une partie, qui se trouve en face de la partie de signalisation du corps externe, un élément d'affichage (8), dans lequel l'élément d'affichage
a) est conçu comme un bossage du corps central, qui s'étend en direction de l'évidement et qui est conçu pour traverser au moins partiellement l'évidement, dans lequel le corps externe comprend, au-dessus de l'évidement continu, un couvercle (9), qui est constitué, dans une partie qui se trouve en face du bossage du corps central, d'un matériau transparent pour la lumière visible ; ou
b) est conçu comme un élément de ressort fixé au corps central et se trouvant partiellement dans le corps interne, qui s'étend en direction de l'évidement et qui est conçu pour traverser au moins partiellement l'évidement, dans lequel l'élément de ressort est conçu pour se déplacer, lors de l'application d'une pression de >0 kPa à <4 kPa, sur une surface externe de l'élément de ressort, en direction du corps interne.

2. Dispositif de fermeture selon la revendication 1, **caractérisé en ce que** la distance (x) déterminée du corps externe par rapport au corps central, en direction d'un axe de cylindre du corps externe,
i. correspond à une distance d'allongement d'un ressort d'un récipient sous pression à une pression interne déterminée du récipient sous pression, de préférence à une distance d'allongement d'un ressort d'un récipient cous pression à une pression interne du récipient sous pression >0 kPa à <4 kPa ; et/ou
ii. correspond à une valeur de l'ordre de 1 mm à 6 mm, de préférence de 1,5 mm à 5 mm, plus particulièrement de préférence de 2 mm à 4 mm, plus particulièrement de 3 mm.

3. Dispositif de fermeture selon l'une des revendications précédentes, **caractérisé en ce que** la partie de signalisation s'étend sur une surface qui représente > 0 à 90 %, de préférence 5 à 80 %, plus particulièrement de préférence de 10 à 70 %, tout particulièrement de préférence de 20 à 70 %, plus particulièrement de 30 à 60 %, en option de 40 à 50 %, d'une surface du corps externe, qui est disposée globalement perpendiculairement à l'axe central du corps externe.

4. Dispositif de fermeture selon l'une des revendications précédentes, **caractérisé en ce que**, dans la variante a)
i. le matériau transparent pour la lumière visible est sélectionné dans le groupe constitué de verre, PMMA, PC, PVC, PS, PPO, PE et des combinaisons de ceux-ci ; et/ou
ii. le bossage du corps central présente une forme globalement cylindrique ; et/ou
iii. le bossage du corps central présente une hauteur qui est plus haute, de la distance (x) déterminée du corps externe par rapport au corps central, en direction d'un axe de cylindre du corps externe, que la hauteur du corps central sans le bossage ; et/ou
iv. tout le bossage est constitué d'un matériau transparent pour la lumière visible.

5. Dispositif de fermeture selon l'une des revendications précédentes, **caractérisé en ce que**, dans la variante b), l'élément de ressort présente une partie large et une partie étroite ou est constitué de celles-ci, dans lequel, de préférence
i. un ressort est disposé autour de la partie étroite ; et/ou
ii. lors de l'application d'une pression de l'ordre de >0 kPa à <4 kPa sur la partie large, la partie étroite peut être déplacée entièrement dans le corps interne ; et/ou
iii. la partie large présente la forme d'un chapeau de champignon ; et/ou
iv. l'évidement continu présente une butée qui, lors de l'application d'une pression de l'ordre de >0 kPa à <4 kPa sur la partie large, limite le déplacement de la partie large en direction du corps interne.

6. Dispositif de fermeture selon l'une des revendications précédentes, **caractérisé en ce que** le corps central
i. est réalisé d'une seule pièce avec le corps interne ; et/ou
ii. est inséré dans le corps externe par l'intermédiaire d'une liaison enfichée.

7. Dispositif de fermeture selon l'une des revendications précédentes, **caractérisé en ce que**, en direction d'un axe de cylindre du corps externe, le corps externe présente une hauteur qui est supérieure d'au moins 2 mm, de préférence d'au moins 3 mm à la hauteur du corps central dans cette direction.

8. Dispositif de fermeture selon l'une des revendications précédentes, **caractérisé en ce que**, en direction d'un axe de cylindre du corps externe, les évidements présentent une hauteur qui est supérieure d'au moins 2 mm, de préférence d'au moins 3 mm à la hauteur du corps central dans cette direction.

9. Dispositif de fermeture selon l'une des revendications précédentes, **caractérisé en ce que** deux bras de verrouillage du corps central
i. sont réalisés d'une seule pièce avec le corps central ; et/ou
ii. sont réalisés chacun d'une seule pièce avec les crochets de verrouillage.

10. Dispositif de fermeture selon l'une des revendications précédentes, **caractérisé en ce que** le corps externe comprend un affichage de cuisson.

11. Dispositif de fermeture selon l'une des revendications précédentes, **caractérisé en ce que**
i. le corps central globalement cylindrique présente un diamètre de l'ordre de 20 à 35 cm, de préférence de 26 à 28 cm ; et/ou
ii. le corps interne globalement cylindrique présente un diamètre de l'ordre de 5 à 11 cm, de préférence de 7 à 9 cm ; et/ou
iii. le corps externe globalement cylindrique présente un diamètre de l'ordre de 30 à 45 cm, de préférence de 32 à 36 cm.

12. Récipient sous pression (11), de préférence casserole de cuisson sous pression, comprenant un dispositif de fermeture selon l'une des revendications précédentes.

13. Récipient sous pression selon la revendication 12, dans lequel le dispositif de fermeture selon l'une des revendications 1 à 11 est monté sur le récipient sous pression, de préférence est monté sur le récipient sous pression par l'intermédiaire du corps interne du dispositif de fermeture.

14. Récipient sous pression selon l'une des revendications 12 ou 13, **caractérisé en ce que** le récipient sous pression comprend un ressort qui est relié avec le corps interne du dispositif de fermeture et, dans le cas d'une pression de 4 kPa à l'intérieur du récipient sous pression, présente un allongement sur une distance qui correspond globalement à une distance entre le corps central et le corps externe et/ou à une distance entre les bras de verrouillage et l'extrémité des évidements, de préférence une distance d'allongement de l'ordre de 1 mm à 6 mm, de préférence de 1,5 mm à 5 mm, plus particulièrement de préférence de 2 mm à 4 mm, plus particulièrement de 3 mm.

15. Utilisation du dispositif de fermeture selon l'une des revendications 1 à 11 pour la fermeture d'un récipient sous pression (11), de préférence pour la fermeture d'une casserole de cuisson sous pression.
